# EUROPÄISCHE PATENTANMELDUNG

(11) **EP 2 966 307 A1**
(43) Veröffentlichungstag der Anmeldung: **13.01.2016**
(21) Anmeldenummer: 15175874.5
(22) Anmeldetag: 08.07.2015
(51) Int. Cl.: F16B 5/06

(54) **ANORDNUNG UND VERFAHREN ZUM BEFESTIGEN VON VERKLEIDUNGSTEILEN AN EINER UNTERKONSTRUKTION**

(30) Priorität: 10.07.2014 DE 102014213430; 14.07.2014 DE 102014213662
(71) Anmelder: Bombardier Transportation GmbH, 10785 Berlin (DE)
(72) Erfinder: Stein, Yvonne, 02625 Bautzen (DE); Teuber, Jens, 02692 Doberschau (DE)
(74) Vertreter: Patentanwälte Bressel und Partner mbB

(57) **Zusammenfassung**

Die Erfindung betrifft eine Anordnung und ein Verfahren zum Befestigen von Verkleidungsteilen an einer Unterkonstruktion, insbesondere an einer übliche Wand- oder Deckenkonstruktionen im Bereich der Fahrzeug- oder Gebäudetechnik, umfassend Verkleidungsteile (1, 1') zum Verkleiden einer Unterkonstruktion (8), wobei die Verkleidungsteile durch eine Fuge voneinander beabstandet sind und einer Befestigungseinrichtung (9) zum Befestigen der Verkleidungsteile (1, 1') an der Unterkonstruktion (8), wobei die Befestigungseinrichtung (9) ein Verriegelungselement (2) und Aufnahmeteile (5, 5', 7) zur Aufnahme des Verriegelungselementes (2) umfasst, wobei erste Aufnahmeteile (5, 5') mit den Rückseiten der Verkleidungsteile (1, 1') verbunden sind und ein zweites Aufnahmeteil (7) mit der Unterkonstruktion (8) verbindbar ist und das Verriegelungselement (2) im montierten Zustand kraft- und/oder formschlüssig in den ersten und zweiten Aufnahmeteilen (5, 5', 7) gelagert und montiert ist und die ersten Aufnahmeteile (5, 5') zwischen sich und der Unterkonstruktion (8) festklemmt.

## Beschreibung

Die vorliegende Erfindung betrifft eine Anordnung zum Befestigen von Verkleidungsteilen an einer Unterkonstruktion nach dem Oberbegriff des Anspruchs 1, sowie ein Verfahren zum Befestigen von Verkleidungsteilen an einer Unterkonstruktion nach dem Oberbegriff des Anspruchs 7.

Insbesondere soll die erfindungsgemäße Anordnung dabei zur Befestigung zweier benachbarter, großflächiger, gleichartiger Verkleidungsteile, die prinzipbedingt planeben zueinander ausgerichtet werden, geeignet sein.

Bei den genannten Unterkonstruktionen kann es sich um aus der Fahrzeug- oder Gebäudetechnik übliche Wand- oder Deckenkonstruktionen handeln, womit im erfindungsgemäßen Sinne aber jegliche zu verkleidende Wand- oder Deckenaufbauten zu verstehen sind. Insbesondere in Fahrzeugen wie Schienenfahrzeugen werden derartige Unterkonstruktionen relativ aufwendig verkleidet. So ist es häufig üblich, Verkleidungsteile mittels sichtbaren Befestigungsteilen an den Unterkonstruktionen zu fixieren. Besonders in den sichtbaren Fugenbereichen der Teile zueinander sind die Bauteile wenig fixiert. Bisher wurden die Seitenverkleidungen untereinander mit Klett- oder Klebeband verbunden und zusätzlich an abgedeckten Stellen im Fahrzeug verschraubt. Die Bauteilkonturen waren dadurch weniger gut fixiert.

Eine Anordnung der genannten Art ist beispielsweise aus der DE 100 62 990 A1 bekannt. Die verwendeten Befestigungsmittel sind dabei nicht nur für den Fahrgast sichtbar, sondern auch zugänglich, sodass es relativ häufig zu Zerstörungen durch Vandalismus kommt. Außerdem handelt es sich bei den Befestigungsmitteln auch häufig um Schrauben, die Bohrungen in den Verkleidungsteilen erfordern, wodurch eine Anreißgefahr der Verkleidungsteile besteht, da diese häufig aus Kunststoff bestehen.

Aus diesen Gründen ist man dazu übergegangen, derartige Verkleidungsteile mit verdeckt und für den Fahrgast nicht sichtbaren Befestigungsmitteln zu fixieren. Dabei sind Rastverbindungen bekannt, bei denen verdeckte Spangen mit entsprechenden Gegenstücken verrasten, wobei sich bei derartigen Befestigungen sowohl die Montage als auch die Demontage relativ aufwendig gestalten. Eine weitere Variante sind Klettbandbefestigungen, die sich aber auch bezüglich der Montage bzw. der Demontage relativ aufwendig gestalten und es bei der Demontage häufig zu Beschädigungen des Klettbandes kommt. Außerdem sind Toleranzausgleiche mit derartigen Befestigungsmittel kaum möglich.

Außerdem sind Anordnungen bekannt (z.B. aus DE 10 2007 056 168 A1), deren eigentliche Befestigungsmittel von außen ebenfalls nicht sichtbar sind, die aber die eigentlichen Verkleidungen der Unterkonstruktion durch ein diese Verkleidungen überlappendes zusätzliches Verkleidungsteil verbinden. Dabei handelt es sich um eine Verriegelungsschiene, welche im montierten Zustand die Wandverkleidungen zwischen sich und der Unterkonstruktion festklemmt. Nachteilig ist bei dieser Anordnung, dass ein zusätzliches Verkleidungsteil zur Verfügung gestellt werden muss und zusätzliche Kanten bei der Verkleidung entstehen. Außerdem ist ein Toleranzausgleich eher schwierig und bei einer Demontage könnte das zusätzliche Verkleidungsteil leicht beschädigt werden.

Die Aufgabe der vorliegenden Erfindung besteht deshalb darin, die Nachteile aus den oben beschriebenen Anordnungen oder Befestigungseinrichtungen zu überwinden. Insbesondere soll eine Anordnung vorgestellt werden, die es erlaubt, Verkleidungen vandalismusresistent ohne sichtbare Verschraubungen zu befestigen und Toleranzen aus der Unterbaustruktur auszugleichen. Zum Umfang der Erfindung gehört dabei auch ein Verfahren zum Befestigen von Verkleidungsteilen an einer Unterkonstruktion mittels einer derartigen Anordnung.

Erfindungsgemäß wird diese Aufgabe durch die Merkmale des Anspruchs 1 und 7 gelöst. Vorteilhafte Ausbildungen der Erfindung sind in den nachgeordneten Ansprüchen enthalten.

Demnach beinhaltet die vorliegende Erfindung eine Anordnung zum Befestigen von Verkleidungsteilen an einer Unterkonstruktion, insbesondere an einer übliche Wand- oder Deckenkonstruktionen im Bereich der Fahrzeug- oder Gebäudetechnik, umfassend Verkleidungsteile zum Verkleiden einer Unterkonstruktion, wobei die Verkleidungsteile durch eine Schattenfuge voneinander beabstandet sind, und einer Befestigungseinrichtung zum Befestigen der Verkleidungsteile an der Unterkonstruktion, wobei erfindungsgemäß die Befestigungseinrichtung ein Verriegelungselement und verschiedene Aufnahmeteile zur Aufnahme des Verriegelungselementes umfasst, wobei einerseits erste Aufnahmeteile mit den Rückseiten der Verkleidungsteile verbunden sind und ein anderes, zweites Aufnahmeteil mit der Unterkonstruktion verbindbar oder verbunden ist und das Verriegelungselement kraft- und/oder formschlüssig in den vorgenannten Aufnahmeteilen gelagert und montiert ist und im montierten Zustand die ersten Aufnahmeteile zwischen sich und der Unterkonstruktion festklemmt. Dadurch werden auch die mit den ersten Aufnahmeteilen verbundenen Verkleidungsteile an der Unterkonstruktion befestigt.

Insbesondere ist dabei vorgesehen, dass die mit den Verkleidungsteilen verbundenen Aufnahmeteile jeweils eine zu der Schattenfuge oder zu dem Raum zwischen der Schattenfuge und der Unterkonstruktion offene Aussparung aufweisen, die sich im montierten Zustand spiegelverkehrt gegenüberliegen und jeweils eine Aufnahmetasche für das Verriegelungselement bilden. Im montierten Zustand ragt das Verriegelungselement durch die Öffnung in die Aussparung hinein. Laut Definition ist eine Schattenfuge eine Fuge zwischen den Oberflächen zweier Bauteile, im vorliegenden Fall der Verkleidungsteile. Da die ersten Aufnahmeteile jedoch mit den Verkleidungsteilen verbunden sind, können die einzelnen Verkleidungsteile mit dem damit verbundenen ersten Aufnahmeteil als bautechnische Einheit angesehen und die ersten Aufnahmeteile bilden einen Bereich der Schattenfuge. Betrachtet man dagegen die Schattenfuge als lediglich durch die Verkleidungsteile definiert, sind die Aussparungen der ersten Aufnahmeteile zu dem Raum offen, der sich bei senkrechter Projektion der Schattenfuge auf die Unterkonstruktion als Projektionsraum ergibt.

Vorzugsweise sind die Aufnahmetaschen auch nach oben offen. Dies erleichtert die Montage und ermöglicht eine Justierung der Position der Verkleidungsteile.

Die ersten Aufnahmeteile sind z. B. kraftschlüssig und/oder formschlüssig und/oder stoffschlüssig mit den Rückseiten der Verkleidungsteile verbunden. Das zumindest eine zweite Aufnahmeteil ist z. B. kraftschlüssig und/oder formschlüssig und/oder stoffschlüssig mit der Unterkonstruktion verbindbar oder verbunden. Für die ersten und zweiten Aufnahmeteile jeweils bevorzugt wird eine stoffschlüssige Klebstoffverbindung. Das zweite Aufnahme Teil kann jedoch zum Beispiel auch mit der Unterkonstruktion verschweißt, vernietet oder verschraubt sein, während die ersten Aufnahmeteile mit den Verkleidungsteilen verklebt sind.ge

Nach einer Ausgestaltung ist vorgesehen, dass das mit der Unterkonstruktion verbundene Aufnahmeteil als U-förmiges Laschenteil mit seitlichen Auflageflächen zur Verbindung mit der Unterkonstruktion ausgebildet ist, wobei im zwischen seitlichen Auflagen liegenden Mittelteil eine (insbesondere geschlitzte) Öffnung vorgesehen ist, an welcher eine Käfigmutter angeordnet ist. Die geschlitzte Öffnung ist dabei zum Ausgleich baulicher Toleranzen vorgesehen.

Nach einem besonderen Merkmal ist vorgesehen, dass das Verriegelungselement einen Riegel und eine Befestigungsschraube umfasst, wobei der Riegel eine Bohrung aufweist, die zur Aufnahme der Befestigungsschraube als Durchgangsbohrung vorgesehen ist. Die Befestigungsschraube (vorzugsweise als Innensechskantkopfschraube ausgebildet) dient zur kraftschlüssigen Verbindung mit dem zweiten Aufnahmeteil, insbesondere mit der im Aufnahmeteil angeordneten Käfigmutter. Besonders vorteilhaft ist vorgesehen, dass die Bohrung im Riegel eine Gewindebohrung ist zur Aufnahme einer Schraube, deren Außengewinde größer ist als das Außengewinde der vorgenannten Befestigungsschraube. Diese Schraube ist nach einem bevorzugten Merkmal der Erfindung als Montagehilfe zur Einführung und Positionierung des Verriegelungselementes in den Raum zwischen den Verkleidungsteilen und der Unterkonstruktion vorgesehen, insbesondere in die Aufnahmen der ersten Aufnahmeteile. Die Merkmale des erfindungsgemäßen Verfahrens sind in den Ansprüchen 7 bis 11 aufgeführt, welches sich insbesondere durch die überraschend einfache Montage der Anordnung mittel der beschriebenen Montagehilfe auszeichnet.

Durch die erfindungsgemäße Anordnung können vorteilhaft Toleranzen in x-, y- und z-Richtung, insbesondere über die Käfigmutter, die Schraubtiefe und über die Lage des Riegels ausgeglichen werden. Die Bauteile können weiter unabhängig von einer Montagereihenfolge montiert oder demontiert werden. Die Befestigungsschraube und insbesondere ihr Schraubenkopf erstreckt sich in der Schattenfuge oder in dem Raum zwischen der Schattenfuge und der Unterkonstruktion hinter der Oberfläche der Verkleidungsteile. Damit ist sie lediglich bei besonderen Beleuchtungsverhältnissen durch die vorderseitige Öffnung der Schattenfuge sichtbar und es besteht keine Anstoß- oder Einfädelgefahr. In den Verkleidungsteilen sind keine Bohrungen notwendig, wodurch eine Anreißgefahr vermieden werden kann. Die Oberflächen der Verkleidungsteile werden durch die erfindungsgemäße Anordnung selbsttätig planeben zueinander ausgerichtet.

Nachfolgend wird die vorliegende Erfindung in Bezug auf die Anordnung und dem Verfahren zum Befestigen von Verkleidungsteilen an einer Unterkonstruktion insbesondere an einer übliche Wand- oder Deckenkonstruktionen anhand eines Ausführungsbeispiels in Verbindung mit der Zeichnung näher beschrieben. In der Zeichnung zeigt
- Fig.1: eine perspektivische Darstellung der Anordnung,

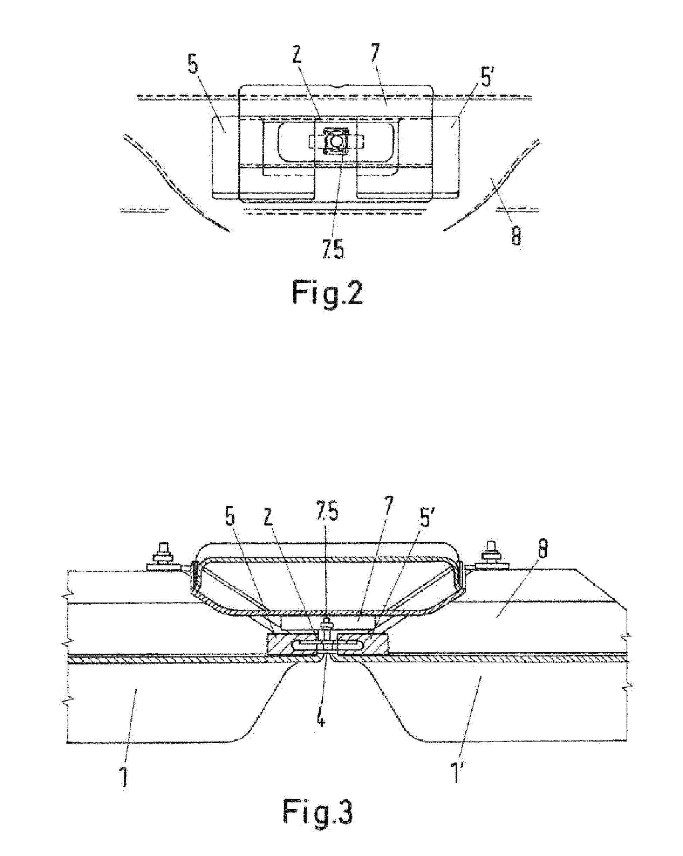

- Fig.2: eine Vorderansicht ohne Verkleidungsteile innerhalb einer Fahrzeugstruktur, und
- Fig.3: eine Schnittdarstellung (Querschnitt) der Anordnung von oben.

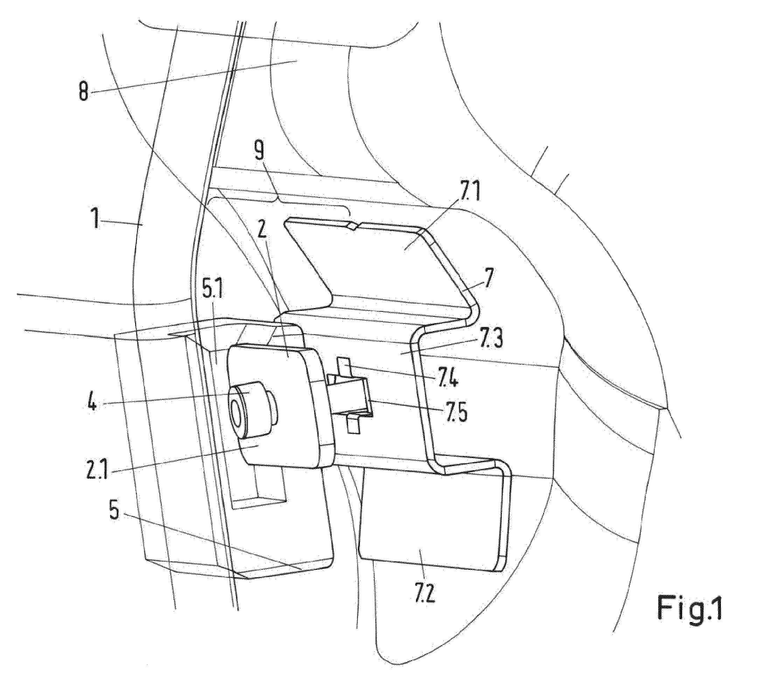

In der Fig. 1 ist eine Anordnung zum Befestigen von Verkleidungsteilen an einer Unterkonstruktion, insbesondere an einer übliche Wand- oder Deckenkonstruktionen im Bereich der Fahrzeug- oder Gebäudetechnik, dargestellt. Die Anordnung umfasst die Verkleidungsteile 1,1' zum Verkleiden einer Unterkonstruktion 8, wobei die Verkleidungsteile 1, 1' (in der Fig.1 ist zum besseren Verständnis nur ein Verkleidungsteil 1 dargestellt) durch eine Schattenfuge voneinander beabstandet sind. Die Befestigungseinrichtung 9 zum Befestigen der Verkleidungsteile 1, 1' an der Unterkonstruktion 8 umfasst ein Verriegelungselement 2 und Aufnahmeteile 5, 5', 7 zur Aufnahme des Verriegelungselementes 2.

Das Aufnahmeteil ist an dem nicht dargestellten zweiten Verkleidungsteil 1' angeordnet. Die Aufnahmeteile 5, 5' sind mit den Rückseiten der Verkleidungsteile 1,1' verbunden, vorzugsweise verklebt, und das Aufnahmeteil 7 ist mit der Unterkonstruktion 8 verbunden, ebenfalls vorzugsweise verklebt.

Das Verriegelungselement 2 ist kraft-und/oder formschlüssig in den Aufnahmeteilen 5, 5', 7 gelagert und montiert und klemmt im montierten Zustand die Verkleidungsteile 1,1' zwischen sich und der Unterkonstruktion 8 fest. Die Aufnahmeteile 5, 5' weisen jeweils einen nach oben und zu den Schattenfugen offenen Schlitz 5.1 auf. Die beiden Schlitze liegen sich im montierten Zustand spiegelverkehrt gegenüber und bilden eine Aufnahmetasche für das Verriegelungselement 2.

Das Aufnahmeteil 7 ist vorzugsweise als U-förmiges Laschenteil mit seitlichen Auflagen 7.1, 7.2 zur Verbindung mit der Unterkonstruktion 8 ausgebildet. Im zwischen seitlichen Auflagen liegenden Mittelteil 7.3 ist eine geschlitzte Öffnung 7.4 vorgesehen ist, in welcher eine Käfigmutter 7.5 angeordnet ist.

Das Verriegelungselement 2 umfasst einen Riegel 2.1 und eine Befestigungsschraube 4, wobei der Riegel 2.1 eine Gewindebohrung aufweist, die zur Aufnahme der Befestigungsschraube 4 als Durchgangsbohrung genutzt wird. Die Befestigungsschraube 4 ist vorzugsweise als Innensechskantkopfschraube ausgebildet und zur kraftschlüssigen Verbindung mit der im Aufnahmeteil 7 angeordneten Käfigmutter 7.5 vorgesehen. Die Gewindebohrung im Riegel 2.1 dient zur Aufnahme einer Schraube 3 (nicht dargestellt), deren Außengewinde größer ist als das Außengewinde der Befestigungsschraube 4, wobei die Schraube 3 gemäß dem erfindungsgemäßen Verfahren als Montagehilfe zur Einführung und Positionierung des Verriegelungselementes 2 in den/dem Raum zwischen den Verkleidungsteilen und der Unterkonstruktion vorgesehen ist.

Zwei benachbarte Verkleidungsteile 1,1' werden mit ihren innenliegenden Befestigungspunkten zur Unterkonstruktion 8 ausgerichtet und abschließend fixiert. Danach erfolgt die Stabilisierung der Teile im Fugenbereich mittels der Befestigungsvorrichtung. Das Verriegelungselement 2 nimmt dabei eine zentrale Funktion ein. Es beinhaltet ein Innengewinde, welches zur Einführung des Verriegelungselementes 2 hinter die bereits positionierten und fixierten Verkleidungsteile 1, 1' die als Montagehilfe dienende Schraube 3 (ggf. mit leichtfestem Schraubenkleber) aufnimmt, abschließend aber, nach Entfernen der als Montagehilfe dienenden Schraube 3, als Durchgangsbohrung für die endgültige Befestigungsschrauben 4 dient.

Als Aufnahme für das Verriegelungselement 2 dienen zwei auf der Rückseite der Verkleidungsteile 1,1' befestigten Aufnahmeteile 5, 5' (je eins pro Verkleidungsteil). Beide Aufnahmeteile 5, 5' sind nach oben und zur Fuge zwischen den Aufnahmeteilen 5, 5' hin geschlitzt als Aufnahmetaschen für den Riegel des Verriegelungselementes 2.

Das Verriegelungselement 2 wird mittels der als Montagehilfe dienenden Schraube 3 durch die Schattenfuge unter die Bauteile geführt, ggf. um 90° gedreht und in den beiden geschlitzten Aufnahmeteilen 5, 5' der Verkleidungsteile 1,1' abgelegt. Anschließend wird die als Montagehilfe dienende Schraube 3 entfernt und eine nächstkleinere Schraube, nämlich die Befestigungsschraube 4 (ggf. mit leichtfestem Schraubenkleber) in die Gewindebohrung im Riegel 2.1 des Verriegelungselementes 2 gesteckt und zur Käfigmutter 7.5 im Aufnahmeteil 7 verschraubt. Die Einschraubtiefe ist dabei unabhängig von der einzustellenden Ebenheit der Gesamtoberfläche.

Die Verkleidungsteile benötigen für die Ausrichtung und Fixierung der Anschlussfugen zueinander keine Bohrungen. Besonders beim Einsatz von Kunststoffteilen ist damit die Anreißgefahr ausgeschlossen. Außerdem können die Verkleidungsteile unabhängig von der Montagereihenfolge montiert oder demontiert werden.

Durch die erfindungsgemäße Anordnung besteht keine Verletzungs-, Anstoß- oder Einfädelgefahr durch über die Verkleidungsteile herausstehenden Kanten.

## Patentansprüche

1. Anordnung zum Befestigen von Verkleidungsteilen an einer Unterkonstruktion, insbesondere an einer übliche Wand- oder Deckenkonstruktionen im Bereich der Fahrzeug- oder Gebäudetechnik, umfassend Verkleidungsteile (1, 1') zum Verkleiden einer Unterkonstruktion (8), wobei die Verkleidungsteile durch eine Fuge voneinander beabstandet sind und einer Befestigungseinrichtung (9) zum Befestigen der Verkleidungsteile (1, 1') an der Unterkonstruktion (8),
**dadurch gekennzeichnet, dass**
die Befestigungseinrichtung (9) ein Verriegelungselement (2) und Aufnahmeteile (5, 5', 7) zur Aufnahme des Verriegelungselementes (2) umfasst, wobei erste Aufnahmeteile (5, 5') mit den Rückseiten der Verkleidungsteile (1, 1') verbunden sind und ein zweites Aufnahmeteil (7) mit der Unterkonstruktion (8) verbindbar ist und das Verriegelungselement (2) im montierten Zustand kraft- und/oder formschlüssig in den ersten und zweiten Aufnahmeteilen (5, 5', 7) gelagert und montiert ist und die ersten Aufnahmeteile (5, 5') zwischen sich und der Unterkonstruktion (8) festklemmt.

2. Anordnung nach Anspruch 1, **dadurch gekennzeichnet, dass** die Aufnahmeteile (5, 5') jeweils eine zur Schattenfuge oder zu dem Raum zwischen der Schattenfuge und der Unterkonstruktion offene Aussparung aufweisen, die sich im montierten Zustand spiegelverkehrt gegenüberliegen und jeweils eine Aufnahmetasche für das Verriegelungselement (2) bilden.

3. Anordnung nach dem Anspruch 1 oder 2, **dadurch gekennzeichnet, dass** das zweite Aufnahmeteil (7) als U-förmiges Laschenteil mit seitlichen Auflagen (7.1, 7.2) zur Verbindung mit der Unterkonstruktion (8) ausgebildet ist, wobei im zwischen den seitlichen Auflagen liegenden Mittelteil (7.3) eine Öffnung (7.4) vorgesehen ist, an welcher eine Käfigmutter (7.5) angeordnet ist.

4. Anordnung nach einem der Ansprüche 1 bis 3, **dadurch gekennzeichnet, dass** das Verriegelungselement (2) einen Riegel (2.1) und eine Befestigungsschraube (4) umfasst, wobei der Riegel (2.1) eine Bohrung aufweist, die zur Aufnahme der Befestigungsschraube (4) vorgesehen ist, wobei die Befestigungsschraube (4) zur kraftschlüssigen Verbindung mit dem zweiten Aufnahmeteil (7) dient.

5. Anordnung nach Anspruch 4, **dadurch gekennzeichnet, dass** die Bohrung im Riegel (2.1) eine Gewindebohrung zur Aufnahme einer Schraube (3) ist, deren Außengewinde größer ist als das Außengewinde der Befestigungsschraube (4).

6. Anordnung nach Anspruch 5, **dadurch gekennzeichnet, dass** die Schraube (3) als Montagehilfe zur Einführung und Positionierung des Verriegelungselementes (2) in den/dem Raum zwischen den Verkleidungsteilen und der Unterkonstruktion ist.

7. Verfahren zum Befestigen von Verkleidungsteilen (1, 1') an einer Unterkonstruktion (8) insbesondere an einer übliche Wand- oder Deckenkonstruktionen im Bereich der Fahrzeug- oder Gebäudetechnik, unter Verwendung einer Befestigungseinrichtung (9) zum Befestigen der Verkleidungsteile (1, 1') an der Unterkonstruktion (8), wobei die Verkleidungsteile (1, 1') durch eine Fuge voneinander beabstandet befestigt werden, **dadurch gekennzeichnet, dass**
als Teile der Befestigungseinrichtung (9) ein Verriegelungselement (2) und Aufnahmeteile (5, 5', 7) zur Aufnahme des Verriegelungselementes (2) verwendet werden, wobei erste Aufnahmeteile (5, 5') mit den Rückseiten der Verkleidungsteile (1, 1') verbunden werden oder sind und ein zweites Aufnahmeteil (7) mit der Unterkonstruktion (8) verbunden wird oder ist, und dass das Verriegelungselement (2) kraft- und/oder formschlüssig in den Aufnahmeteilen (5, 5', 7) gelagert und montiert wird und im montierten Zustand die ersten Aufnahmeteile (5, 5') zwischen sich und der Unterkonstruktion (8) festklemmt.

8. Verfahren nach Anspruch 7, **dadurch gekennzeichnet, dass** die ersten Aufnahmeteile (5, 5') jeweils einen zur Fuge oder zu dem Raum zwischen der Fuge und der Unterkonstruktion offenen Aufnahmeraum aufweisen, die spiegelverkehrt einander bezüglich der Fuge oder dem Raum gegenüberliegend angeordnet werden und eine Aufnahmetasche für das Verriegelungselement (2) bilden.

9. Verfahren nach dem Anspruch 7 oder 8, **dadurch gekennzeichnet, dass** das zweite Aufnahmeteil (7) als U-förmiges Laschenteil mit seitlichen Auflagen (7.1, 7.2) und einem Mittelteil (7.3) mit Öffnung (7.4) und Käfigmutter (7.5) ausgebildet wird und mit der Unterkonstruktion (8) verbunden wird.

10. Verfahren nach einem der Ansprüche 7 bis 9, **dadurch gekennzeichnet, dass** als Teile des Verriegelungselementes (2) ein Riegel (2.1) und eine Befestigungsschraube (4) verwendet werden, wobei der Riegel (2.1) mit einer Bohrung versehen wird, die zur Aufnahme der Befestigungsschraube (4) verwendet wird, wobei die Befestigungsschraube (4) mit dem zweiten Aufnahmeteil (7) kraftschlüssig verbunden wird.

11. Verfahren nach Anspruch 10, **dadurch gekennzeichnet, dass** das Verriegelungselement (2) mittels einer als Montagehilfe verwendeten Schraube (3) innerhalb des Raums zwischen den Verkleidungsteilen (1, 1') und der Unterkonstruktion positioniert wird, wobei die Bohrung im Riegel (2.1) als Gewindebohrung zur Aufnahme der Schraube (3) Montagehilfe dient, deren Außengewinde größer ist als das Außengewinde der Befestigungsschraube (4).
